# EUROPEAN PATENT APPLICATION

(11) **EP 0 903 727 A1**
(43) Date of publication of application: **24.03.1999**
(21) Application number: 97830454.1
(22) Date of filing: 17.09.1997
(51) Int. Cl.: G10L 3/00, G10L 5/06

(54) **A system and method for automatic speech recognition**

(71) Applicant: ISTITUTO TRENTINO DI CULTURA, I-38100 Trento (IT)
(72) Inventor: Brugnara, Fabio, 38100 Trento (IT); Federico, Marcello, 38100 Trento (IT)
(74) Representative: Bosotti, Luciano

(57) **Abstract**

Word sequences comprised in a speech signal are recognized by applying a language model that is the result of a combination of other language models and capable of being dynamically redefined during the man-machine interaction. Use is made of hierarchical language models (HLMs) comprising appropriate terminal symbols capable of constituting references to other language models comprised in a plurality of language models. The said hierarchical language models (HLMs) are represented in the form of probabilistic recurrent transition networks with the use of a search engine of the recursive type that operates directly on the said networks and is capable of performing in a single step both the recognition action and the parsing function of an incoming utterance.

## Description

### Field of the invention

The invention is generally concerned with ASR techniques, ASR being an acronym for "Automatic Speech Recognition".

### Description of the prior art and the technical problem underlying the invention

The automatic speech recognition sector has already attained a maturity level that permits it to be used in various contexts, including - for example - controlling equipment and devices by means of spoken orders, data-entry systems, query systems, dictation systems, etc. One of the requirements for assuring satisfactory operation of an automatic speech recognition system is that the part of the system dedicated to extracting the linguistic information from the acoustic signal should be provided with an accurate description of a set of possible hypotheses among which it should look for the utterances that is intended to recognize. This set, whose component elements are word sequences, is normally referred to as the "recognition language" and the model that describes it is referred to as the "language model" (LM). Consequently, the language model brings together the a *priori* knowledge available to the system as regards the possible content of the sentences pronounced by the user.

Within the ambit of automatic speech recognition systems it is the normal practice to make a distinction between fixed language systems and dynamic language systems.

In the former case, it is supposed that the incoming utterances all come from the same domain, so that the recognizer always applies the same language model. The most typical example is automatic dictation.

In the dynamic language systems, the language model may vary during the interaction between the user and the system, according to modifications in the state of the system itself. A typical example is constituted by the so-called dialogue systems, where the user is prompted by the system to answer questions regarding different subjects. Each question may have a particular set of possible answers, so that the recognizer can apply different language models at different moments.

The present invention has to be seen in the context of dynamic systems of this type. If the speech decoder is to achieve a sufficient speed, a good coupling has to exist between the search algorithm and the data structure used for representing the language model. At present, one of the most effective approaches is that of using a dynamic programming procedure, based on the assumption that the language model is represented by means of a finite state network, that is to say, a graph in which the arcs carry labels corresponding to the words. Though convenient for search and efficiency, this representation is not very economical, so that the graph needed for storing a complex language model is one of the most resource-demanding parts of the automatic speech recognition system. This problem becomes even more severe when the system has to be such as to be capable of passing quickly from one language model to another, since in this case several language models have to reside in memory at once. Moreover, the operation of switching from one language model to another may not consist in simply selecting one in a set of available language models. It could become necessary to dynamically define new language models depending on the evolution of the interaction between the user and the system. The need for translating these dynamically generated language models into a structure suitable for speech decoding can adversely affect the system responsiveness.

### Objects and brief description of the invention

The present invention sets itself the object of overcoming the difficulties discussed above.

According to the present invention, this object can be attained thanks to an automatic speech recognition process having the characteristics set out in the claims hereinbelow. The invention also concerns the respective system.

Very briefly, the most important aspects of the invention can be set out as follows.

It uses a structure made up of hierarchical language models (HLMs), which differ from conventional language models in that their terminal symbols can be references to other language models rather than to words or word classes.

The aforesaid hierarchical language models are represented by means of probabilistic recurrent transition networks (PRTNs), where the arc labels can constitute references to other networks.

Use is also made of a dynamic definition of the hierarchical language models obtained by combining elements of a set of predefined basic language models, and their on-the-fly compilation into networks of the type just described (PRTNs).

The invention also employs a recursive search engine that directly searches these networks and is capable of providing both recognition and parsing of an incoming utterance in a single step.

### Theoretical foundation of the invention

Before passing on to a detailed description of a possible embodiment of the invention, however, it may be useful to briefly recall the meaning of some of the terms employed in the above description.

### Hierarchical language models

As previously noted, language models are normally used to assign a *priori* probabilities to particular sequences of words. A common technique for improving the robustness of language models is that of allowing the language model symbols to be not necessarily mere words, but also references to lists of words, called word "classes". Cases in point are "proper name", "city name", and so on. With this approach, the probability of a word in a given context is computed as the probability of its class in the context, times the probability of the word in its class.

Hierarchical language models are a further step in this direction, allowing language model labels to be references to other language models instead of only words or word lists (classes). For example, numbers and dates are often expressions that span more words in an utterance. They cannot be represented by means of word classes, but they can be well isolated and modelled by specific language models. In this sense, hierarchical language modelling can have benefits in many applications of speech technology, especially as a powerful technique for managing on-the-fly definitions of dynamic language models.

### Probabilistic recurrent transition networks

As previously stated, language models need to be properly represented in order to be well exploited by a speech recognition system. The most common structure for storing language models relies on the use of Probabilistic Finites State Networks (PFSN). i.e. graphs whose arcs have both a probability and a word label attached. These networks are not suitable for representing hierarchical language models, but they can be generalized to probabilistic recurrent transition networks (PRTN) by allowing arc labels to refer to other PRTNs. In contrast to PFSNs, PRTNs are thus recursive structures. If the hierarchical language model to be represented does not contain recursion, PRTNs can be converted into standard PFSNs, but in this way most of the advantages would be lost.

### Dynamic definition of hierarchical language models

In a dynamic language system, dynamic definition of language models can greatly benefit from the above approaches. In these systems, in fact, it is often the case that the language models corresponding to the different states of the interaction differ from each other in being different combinations of elements of a common pool of basic component language models. The use of a hierarchical representation allows to avoid the overhead that would result if they had to be translated into standard language models. In the solution according to the invention, dynamic language models are generated by means of regular expressions whose terminal symbols may refer to basic language models, and these expressions are compiled into PRTNs. The resulting networks are normally very compact in their recursive representation, but they may correspond to complex hierarchical language models if all their external links are taken into account.

### Recursive speech decoder

In order for the hierarchical approach to be useful in practice, it is of importance that the speech decoding engine is able to work on the previously described recurrent PRTN structures without needing its translation into a standard PSFN.

In the embodiment preferred at this moment, the solution according to the invention proposes to employ a modified Viterbi decoder working on PRTNs. By exploiting the recursive graph structure, the module can also build a parsing tree of an input utterance, thus providing a one-step recognition and parsing procedure.

### Detailed description of an embodiment of the solution according to the invention

A possible embodiment of a solution in accordance with the invention will now be described as a mere example that is not to be regarded as being limitative in any way, the description making reference to the following figures attached hereto:
- Figure 1 shows the structure of a speech recognition system according to the invention in the form of a block diagram of the functional type;
- Figure 2 shows a possible application example of a system according to the invention;
- Figures 3 and 4 illustrate the characteristics of two probabilistic recurrent transition networks created in the system of Figure 1 to permit processing of the example shown in Figure 2; and
- Figure 5 shows the characteristic tree structure of the parsing function implemented in the embodiment here described.

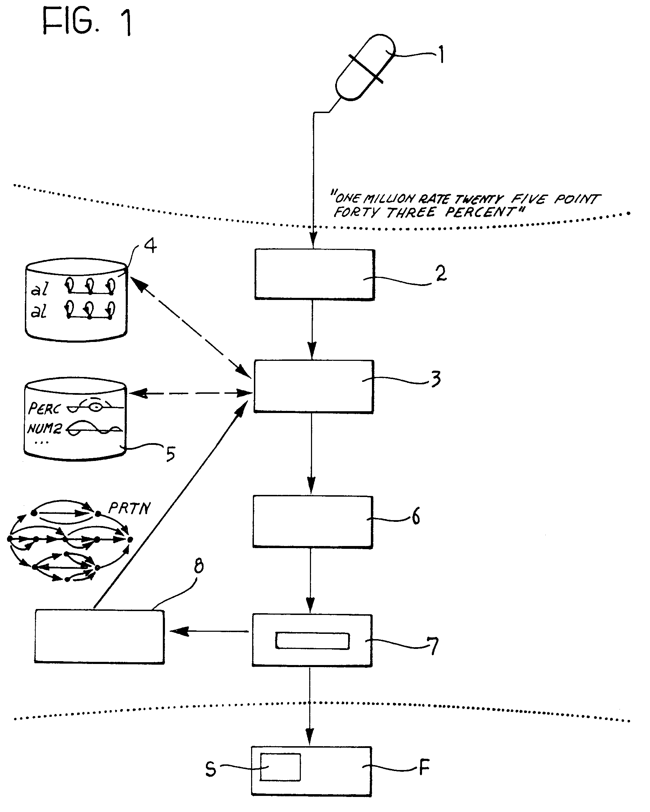

The overall speech recognition system shown in Figure 1 is generally intended to realize any kind of transformation of a physical reality F upon receipt of a stimulus signal consisting of a speech signal. As has already been outlined in the introductory part of the present description, the system in question could be, for example, an automatic dictation system, any system that permits a device or an apparatus being controlled upon receipt of command signals represented by voice messages produced by a speaker, a data-entry system, an information request system capable of responding to questions concerning particular topics (financial information, train and aircraft timetables, etc.), and similar applications.

In a manner that as such is well known, the system comprises an input interface that terminates in a microphone 1 capable of capturing the speech signal of one or more speakers and transforming it - in a signal processor indicated by 2 - into a digital signal that conveys the content of the speech signal captured by the microphone 1.

All this takes place in accordance with well known criteria that need not here be illustrated in any detail, not least because they are not in themselves relevant for the purposes of understanding the invention.

In the operating example here considered it will be supposed that the signal captured by the microphone 1 corresponds to the English spoken phrase "one million rate twenty five point forty three percent", i.e. the expression of an item of information of - for example - a financial type concerning a rate of 25.43% applied to an amount equal to a million.

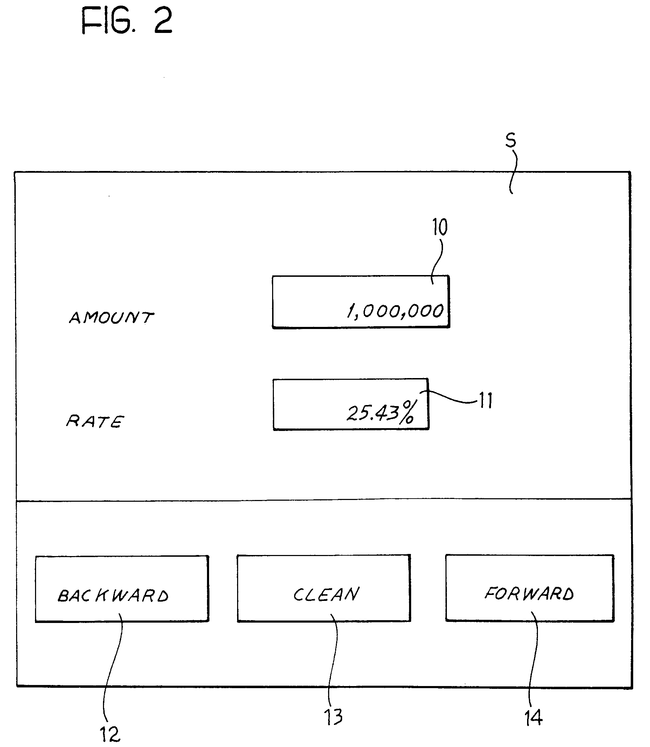

In general, it will be supposed that the system - in accordance with criteria that as such are well known - preserves an item of information intended to identify, at least at the beginning of the interaction, a language model accepted in a particular case. In practice, in the example here considered, the user himself may have signalled to the system - for example, by means of information supplied by pressing one or more keys on a keyboard, or by touching a screen or in any other way (including some previous use of the described speech recognition system) - the fact that the interaction about to take place concerns, for example, the obtainment or introduction of information of a financial nature. It will here be supposed that the active language model of the system is destined to accept data corresponding to the mask S (presented, for example, on a display screen) represented in Figure 2, with a field 10 for the amount (i.e. the previously mentioned value of one million), a field 11 for the rate or percentage (i.e. the previously mentioned value of 25.43%) one or more fields 12 to 14 for the development of the interaction and here denominated, respectively, "backward", "clean" and "forward".

In particular, one of the fields 10 or 11 may be chosen by pronouncing a corresponding key word. One or more of the said fields may receive an attribution by pronouncing the key word and the appropriate value or by simply following their order, for example, without pronouncing any key word, but only the respective values. Lastly, the mask may be cleaned and/or the next mask or the previous mask may be called by pronouncing a single command.

If we now return to the layout of Figure 1, the signal processing device (in the case here considered the processor 2) generally realizes not only the pure and simple digitalization of the signal corresponding to the input speech, but also the pre-processing actions intended to extract the important features or observations contained in the speech signal. This function, once again, is realized in accordance with criteria that as such are well known to the state of the art and do not therefore call for further discussion.

The said observations, usually expressed in the form of numerical vectors Y1, Y2, ..., Yₙ, are fed to a decoder 3 whose manner of functioning is based specifically on the use of a probabilistic recurrent transition network as mentioned on several occasions in the introduction to this description.

In particular, in the decoder 3 the said observations Y1, Y2, ..., Yₙ can be processed in such a manner as to generate the best possible interpretation of the input corresponding to the speech signal. To this end, the decoder avails itself of two knowledge sources:
- the so-called acoustic models, stored in a so-called deposit or repository (in practice we are here concerned with a memory 4) connected to the decoder 3; in the repository 4 there are contained one or more acoustic models that may have been created in a known manner in the course of an initial learning phase in which one or more users have pronounced typical words or phrases to enable the system to learn, as it were, to recognize their voice;
- the active language model, represented specifically by means of a probabilistic recurrent transition network, so that the language model will typically contain references to other language models that have been previously introduced into the decoder and memorized in another repository or memory 5 that dialogues with the decoder 3 in accordance with modalities that are substantially analogous to those of memory 4.

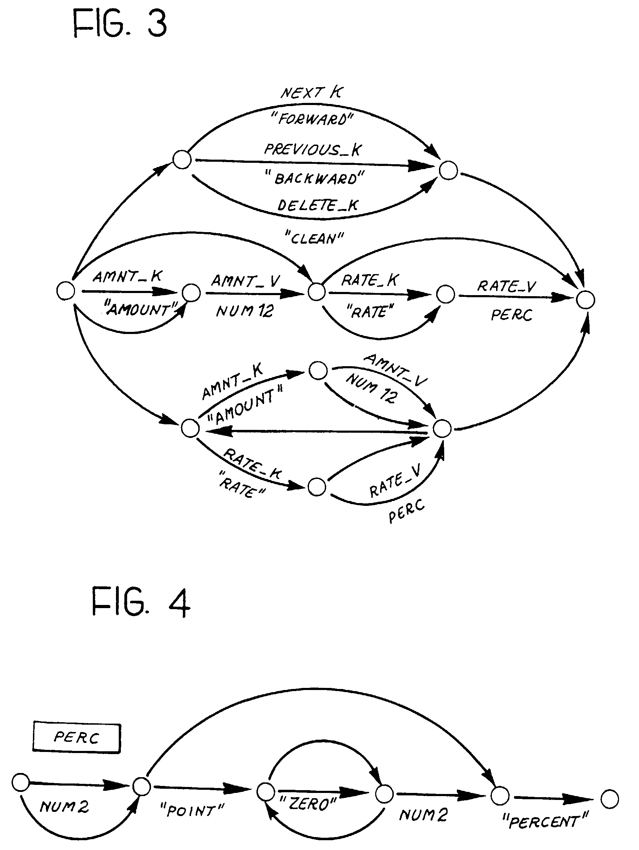

The functioning of the decoder 3 can be more readily understood by referring to Figures 3 to 5, where the latter, in particular, shows the details of the parsing tree constructed by the decoder 3. Supposing that the system commences from an initial state 100 (and, of course, assuming also that the spoken phrase to be processed is the one cited above), one can see how the system, initially positioned for the input of the value "one million" in field 10, can evolve from its first branch 101, which leads to the predisposition for receiving the said value, to the subsequent evolution in 102 towards the predisposition for receiving the information corresponding to this value, articulated into two words ("one" and "million") as represented, respectively, by the branches 103 and 104.

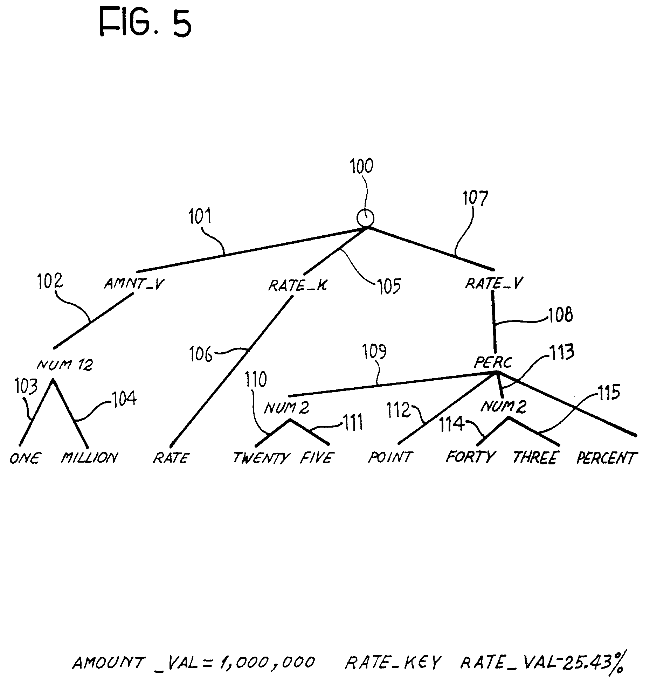

Alternatively, the tree of Figure 5 can evolve in 105 towards the predisposition for selecting field 11 actuated in 106 (word "rate"). The further starting section of the tree of Figure 5, i.e. the branches numbered with the successive numbers 107 to 116, corresponds to the predisposition of the system for receiving the data relating to field 11 as a percentage value, this being expressed by a first double number (the words "twenty" and "five"), followed by a second double number (the words "forty" and "three") separated by the point that in English usage separates the integer fraction of the numbers from the decimal fraction and followed by the indication that the value in question is a percentage (the word "percent"). As far as this tree structure is concerned, it can be seen from Figures 3 and 4 that the active language model contains references to language models named "num 12", "num 2" and "perc".

It will readily be appreciated that these language models correspond, respectively:
. to the word sequences that express numbers comprised between 0 and 999,999,999,999 (e.g. "fifty five millions two hundred thousand"),
. to the word sequences that express the numbers comprised between 0 and 99, and
. to the more complex model represented in Figure 4.

It is moreover quite obvious that a representation of the language model of the type shown in Figure 4 with specific reference to the percentage information is applicable to all the other language models that have been mentioned hereinabove. In any case, one can readily appreciate that the hierarchic structure of the language models that have just been described makes it possible to ensure that each one of them can refer to other language models.

On the other hand, the numerical reference 6 identifies a post-processing module that processes the parsing tree generated by the decoder 3 to provide a suitable representation of the significance (meaning), a semantic frame, for example. In particular, the module 6 also performs language processing operations: for example, the word sequences that express numbers are effectively transformed into numbers with a view to their introduction into the system.

The reference 7 identifies an operating module intended to transform the significance representations generated in the post-processor 6 into effective actions or commands (that is to say, modifications of the physical reality F) for such particular external modules as a user interface or a control device for some item of equipment (a videowriting system, for example), realizing also the action of updating the active language model determined on the basis of pre-established internal rules. The language model in question is generated by means of a syntactic expression that, in its turn, is compiled in the form of a probabilistic recurrent transition network in a graph compilation module 8 that, just as shown in Figure 1, performs a feedback action from the management module 7 to the decoder 3.

Given the principle of the invention, of course, the realization details and the embodiments can be varied very extensively as compared with the embodiment here described and illustrated without in any way going beyond the scope of the present invention.

## Claims

1. An automatic speech signal recognition process, wherein the speech word sequences are recognized by applying (3) a language model derived from a combination of a plurality of language models, the said model being capable of being redefined at every new input phrase on the basis of predefined internal rules, characterized in that the said language models (LMs) are hierarchical language models (HLMs) and comprise respective terminal symbols capable of constituting references to at least another language model of the said plurality and in that the recognition of the said speech word sequences is translated into appropriate actions to modify a corresponding physical entity (10 to 14).

2. A process in accordance with Claim 1, characterized in that the said hierarchical language models (HLMs) are represented as probabilistic recurrent transition networks whose graphs comprise arcs with appropriate labels capable of constituting references to other networks that represent respective other hierarchical language models of the said plurality.

3. A process in accordance with Claim 2, characterized in that the said hierarchical language models (HLMs) are defined in a dynamic manner by combining the elements of a set of predefined basic language models by compilation thereof during the performance of the recognition action in the said probabilistic recurrent transition networks, maintaining possibly references to other networks.

4. A process in accordance with Claim 2 or Claim 3, characterized in that it comprises the operation of implementing a direct recursive search function in the said probabilistic recurrent transition networks that realizes in a single step (3) both the recognition and the parsing function of an incoming utterance.

5. An automatic speech recognition system comprising means (2, 3, 6, 7) for recognizing speech word sequences that apply (3) a language model deriving from a combination (8) of a plurality (5) of language models, the said model being capable of being redefined (7) for every new input (1) on the basis of predefined internal rules, characterized in that it comprises:
- decoding means (3, 6) acting on the speech signal, where the said decoding means (3) utilize hierarchical language models (HLMs) comprising terminal symbols capable of constituting references to other language models of the said plurality of language models (LMs), and
- operating means (7) that cooperate with the said decoding means (3, 6) to translate the recognition of the said speech word sequences into appropriate actions to modify a corresponding physical entity (10 to 14) and to update the language model.

6. A system in accordance with Claim 5, characterized in that in the said decoding means (3, 6) the said hierarchical language models are represented in the form of probabilistic recurrent transition networks (Figure 3, Figure 4) whose graphs comprise arcs with appropriate labels capable of constituting references to the respective networks of other hierarchical language models of the said plurality.

7. A system in accordance with Claim 6, characterized in that the said operating means (7, 8) generate the said hierarchical language models in dynamic form by combining the elements of a set of basic language models stored in the system (4, 5) and compiling them in the appropriate probabilistic recurrent transition networks.

8. A system in accordance with Claim 6 or Claim 7, characterized in that it comprises a recursive search engine (3) that operates directly on the said probabilistic recurrent transition networks to realize simultaneously and in a single step both the recognition and the parsing operation of the incoming utterances.

9. A system in accordance with any of Claims 5 to 8, characterized in that the said operating means (7) realize at least one of the operations chosen from among the following group: transcription of the said speech signal into electronic text, automatic bringing into action of an apparatus upon receipt of the said speech signal, entry of structured data corresponding to word sequences of the said speech signal into a database, extraction of information in response to a request corresponding to the word sequences of the said speech signal, or automatic generation of vocal response/request messages for a system user.
